# EUROPEAN PATENT SPECIFICATION

(11) **EP 3 029 591 B1**
(45) Date of publication and mention of the grant of the patent: **05.02.2020**
(21) Application number: 15198096.8
(22) Date of filing: 04.12.2015
(51) Int. Cl.: G06F 21/40, H04L 29/06, H04W 4/02, H04W 12/06, H04L 9/08

(54) **METHOD FOR UNLOCKING ADMINISTRATION AUTHORITY AND DEVICE FOR AUTHENTICATION**
VERFAHREN ZUM ENTSPERREN EINER VERWALTUNGSAUTORITÄT UND AUTHENTIFIZIERUNGSVORRICHTUNG
PROCÉDÉ DE DÉVERROUILLAGE D'AUTORITÉ D'ADMINISTRATION ET DISPOSITIF POUR L'AUTHENTIFICATION

(30) Priority: 05.12.2014 CN 201410742966
(43) Date of publication of application: 08.06.2016
(73) Proprietor: Xiaomi Inc., Beijing 100085 (CN)
(72) Inventor: SHI, Dalong, Haidian District Beijing 100085 (CN); LIN, Jinbin, Haidian District Beijing 100085 (CN); MA, Kun, Haidian District Beijing 100085 (CN)
(74) Representative: Robson, Aidan John

(56) References cited:
- EP-A1- 1 564 928
- US-A1- 2005 278 776
- US-A1- 2014 189 785
- US-B2- 8 208 943
- US-B2- 8 601 061

## Description

### TECHNICAL FIELD

The present disclosure generally relates to the technical field of computer information security, and more particularly, to a method for unlocking administration authority of a data processing system and a device for performing authentication.

### BACKGROUND

With rapid development of computer technology, the computer is widely used and has become an indispensable tool in daily life. Increasing attention is paid to data security of a computer system, for example, by providing locking and unlocking functions of system administration authority.

Generally, under a locking state of administration authority, a user is unable to operate a system and the system may be provided with an administration authority unlocking page (for example, system identity authentication page) on which the user may input an account and a password. The administration authority may be unlocked in case of a successful authentication, and the user may operate the system. Regarding some systems with higher security level, a password may be segmented into multiple segments in the charge of different administrators. When it is necessary to operate the system, these administrators in charge need to respectively input password segments in sequence so as to unlock administration authority. This method may effectively improve system security.

In the process of implementing the present disclosure, it is found that at least following problems exist. When the above processing method is adopted for unlocking system administration authority, it may be unable to unlock a system administration authority once a certain administrator forgets the password. Thus, the method has poorer flexibility in unlocking administration authority.

EP 1564928 A1 discloses a method of enabling multiple user access control by applying a polynomial recombination principle.

US 8601061 B2 provides a method, data processing system, and computer program product for sending a notification of a meeting. An identification is made when a number of users in a plurality of users requesting the notification of the meeting is within a threshold distance. Whether the number of users is greater than or equal to a threshold number of the plurality of users needed to have the meeting is determined in response to the identification that the number of users in the plurality of users is within the threshold distance. The notification of the meeting is sent to the number of the users in response to determining that the number of users is greater than or equal to the threshold number.

US 8208943 B2 provides a system and method for tracking crowds of users are provided. In one embodiment, a central system, which includes one or more servers, operates to obtain current locations for users of mobile devices. Based on the current locations of the users, the central system forms crowds of users. As a result of movement of the users and corresponding location updates, the crowds move and change over time. In order to track at least some of the crowds, crowd snapshots for those crowds are created over time and stored. The crowd snapshots preferably maintain anonymity of the users in the crowd at the time the crowd snapshots are created. Thereafter, the crowd snapshots may be used to generate crowd tracking data for select crowds.

US 2005/278776 A1 provides a method to reduce the vexatious complication of personal authentication when using an information technology device or a card, whereby a combination of RFID tags worn by a user is stored when personal authentication is carried out. After that, the RFID tags are detected again in a situation where personal authentication is required. The continuous use of the previous personal authentication is permitted depending on the extent of coincidence between pieces of RFID information thus detected and the combination of stored RFID information, so that further authentication operations can be omitted. In addition, reference is made to a past archive when an RFID list is created. A weighted coefficient is then calculated based on the put-on frequency (put-on archive) in terms of a user's single article or a combination of such articles. The utilization of the weighted coefficient provides personal authentication with a high level of reliability.

### SUMMARY

In order to overcome problems in related technologies, the present disclosure provides a method for unlocking administration authority for a data processing system and an authentication device. The technical solution is as below.

According to a first aspect of embodiments of the present disclosure, a method for unlocking administration authority for a data processing is provided, and the method includes:
receiving, at an authentication device, authentication information sent from a plurality of member devices, wherein the member devices comprising a mobile terminal or a wearable device;
performing a matching authentication of the authentication information;
determining a distance between an authenticated member device and the authentication device, wherein the authentication information sent from the authenticated member device is matched with authentication information prestored in an authorized authentication information list; and
unlocking local administration authority if the number of authenticated member devices that are located within a predetermined distance threshold from the authentication device reaches a predetermined number threshold.
wherein the step of receiving authentication information sent from a plurality of member devices further comprises operating, by each user of a member device from the plurality of member devices, the member device to send the authentication information pre-stored at the member device to the authentication device.

Optionally, the authentication information includes a device identification;
the receiving, at an authentication device, authentication information sent from a plurality of member devices comprises:
receiving at the authentication device a Bluetooth message carrying respective device identifications sent from each of the plurality of member devices;
the determining a distance between the authenticated member device and the authentication device, comprises:
   automatically replying to the Bluetooth message sent from the authenticated member device so as to establish a Bluetooth connection; and
   determining the distance between a corresponding authenticated member device and the authentication device by means of the Bluetooth connection established.

Optionally, after unlocking local administration authority, the method also includes:
recording authenticated member devices from which the distances to the authentication device are smaller than the predetermined distance threshold.

Optionally, the predetermined number threshold is less than or equal to a predetermined number of segments of authentication information in the authorized authentication information list.

Optionally, the method also includes:
receiving at the authentication device an authentication information setting request which carries authentication information to be set;
adding at the authentication device the authentication information to be set into the authorized authentication information list.

Optionally, the method also includes:
receiving at the authentication device a number setting request which carries a number threshold to be set;
adjusting at the authentication device the predetermined number threshold to the number threshold to be set.

According to a second aspect of embodiments of the present disclosure, an authentication system is provided, including:
an authentication device which includes
a receiving module, configured to receive authentication information sent from a plurality of member devices, wherein the member devices comprising a mobile terminal or a wearable device;
a matching module, configured to perform a matching authentication of the authentication information;
a determining module, configured to determine a distance between an authenticated member device and the authentication device, wherein the authentication information sent from the authenticated member device is matched with authentication information prestored in an authorized authentication information list; and
an unlocking module, configured to unlock local administration authority if a number of authenticated member devices that are located within a predetermined distance threshold from the authentication device reaches a predetermined number threshold
and wherein the system also includes a plurality of member devices, configured to send authentication information
wherein the receiving module is configured to receive authentication information sent from the plurality of member devices when a member device from the plurality of member devices is operated, by each user of the member device from the plurality of member devices, to send the authentication information pre-stored at the member device to the authentication device.

Optionally, the authentication information is device identification information;
the receiving module is configured to:
receive a Bluetooth message carrying respective device identification information sent from the plurality of member devices;
the determining module is configured to:
   automatically reply to the Bluetooth message sent from the authenticated member device so as to establish a Bluetooth connection; and
   determine the distance between a corresponding authenticated member device and the authentication device by means of the Bluetooth connection established.

Optionally, the authentication device also includes a recording module, which is configured to:
record authenticated member devices from which the distances determined to the authentication device are smaller than the predetermined distance threshold after unlocking local administration authority.

Optionally, the predetermined number threshold is less than or equal to a predetermined number of segments of authentication information in the authorized authentication information list.

Optionally, the authentication device also includes a setting module, which is configured to:
receive an authentication information setting request carrying authentication information to be set; and
add the authentication information to be set into the authorized authentication information list.

Optionally, the authentication device also includes a setting module, which is configured to:
receive a number setting request which carries a number threshold to be set;
adjust the predetermined number threshold as the number threshold to be set.

According to a third aspect of the embodiments of the present disclosure, there is provided a computer program, which when executing on a processor, performs a method according to the first aspect mentioned above.

The technical scheme according to embodiments of the disclosure may have the following beneficial effects:
In the embodiments of the present disclosure, the authentication device receives authentication information sent by a plurality of member devices; performs a matching authentication of the authentication information; determines a distance between an authenticated member device and the authentication device, wherein the authenticated member device is a member device from which the authentication information sent is matched with authentication information prestored in an authorized authentication information list; and unlocks local administration authority if a number of authenticated member devices from which a distance to the authentication device is smaller than a predetermined distance threshold reaches a predetermined number threshold. In this way, unlocking administration authority is available as long as a certain number of administrators carrying member devices get close to the authentication device, thus improving the flexibility of unlocking administration authority.

The data processing system with which the various aspects of the invention may be used include, but are not limited to a computer, a desktop computer, a mobile terminal, a mobile phone, a laptop computer, a tablet computer and a server.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure. In accompanying drawings:
Fig. 1 is a flow chart showing a method for unlocking administration authority for a data processing system according to an exemplary embodiment.
Fig. 2 is a schematic diagram showing an application scenario of unlocking administration authority for a data processing system according to an exemplary embodiment.
Fig. 3 is a block diagram showing a device for performing authentication according to an exemplary embodiment.
Fig. 4 is a block diagram showing a device for performing authentication according to an exemplary embodiment.

Embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

### Embodiment I

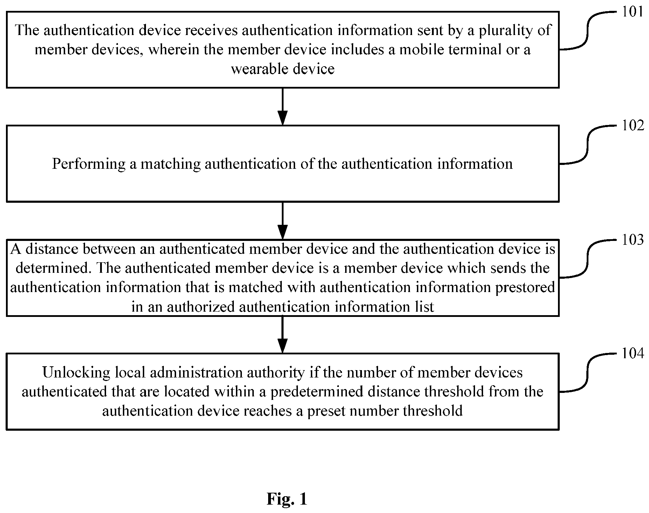

The embodiment of the present disclosure provides a method for unlocking administration authority for a data processing system, as shown in Fig. 1, a processing procedure of the method may include following steps.

In Step 101, the authentication device receives authentication information sent by a plurality of member devices, wherein the member device includes a mobile terminal or a wearable device.

In Step 102, it is performed a matching authentication of the authentication information.

In Step 103, it is determined a distance between an authenticated member device and the authentication device, wherein the authenticated member device is a member device from which the authentication information sent is matched with authentication information prestored in an authorized authentication information list.

In Step 104, local administration authority is unlocked if a number of authenticated member devices from which the distance determined to the authentication device is smaller than a predetermined distance threshold reaches a predetermined number threshold.

In the embodiments of the present disclosure, the authentication device receives authentication information sent by a plurality of member devices; performs a matching authentication of the authentication information; determines a distance between an authenticated member device and the authentication device, wherein the member device authenticated is a member device from which the authentication information sent is matched with authentication information prestored in an authorized authentication information list; and unlocks local administration authority if a number of authenticated member devices from which the distance determined to the authentication device is smaller than a predetermined distance threshold reaches a predetermined number threshold. In this way, unlocking administration authority is available as long as a certain number of administrators carrying member devices get close to the authentication device, thus improving the flexibility of unlocking administration authority.

### Embodiment II

The embodiment of the present disclosure provides a method for unlocking administration authority for a data processing system, which may be applied to any equipment (referred to as an authentication device) with data management capability, wherein, the authentication device may be a desktop computer, or a mobile terminal such as a mobile phone or a tablet computer, or a server group, etc. The member device in the method may be a mobile terminal (such as a mobile phone) or a wearable device and the like. The wearable device is a wearable electronic device, for example, a smart wristband, a smart watch, or a smart necklace, etc. In the present embodiment, a detailed description is made by taking an example in which the authentication device is a management terminal of a certain company and the member device is a smart wristband, with other conditions similar as stated not repeated herein.

A detailed description of the processing procedure as shown in Fig. 1 is made by combining an implementation mode, with contents as below.

In Step 101, the authentication device receives authentication information sent by a plurality of member devices.

Wherein, the authentication information may be unique information of each member device for identity authentication, or may be device identification information of the member device, or may be a segment of predetermined and prestored password.

In implementation, an administrator may carry a member device and get close to the authentication device, and then operate the member device to send the authentication information prestored at the member device to the authentication device. For example, the administrator may click a certain physical button on the member device so as to trigger the member device to send authentication information to the authentication device. Or, the administrator may initiate a certain application installed in the member device or click a certain button in the application, so as to trigger the member device to send authentication information to the authentication device. Or, the member device may automatically send authentication information to the authentication device according to a predetermined period cycle. The authentication device may receive authentication information sent by a plurality of member devices.

In addition, an encryption key may be prestored in the member device, and used to encrypt the authentication information before sending the encrypted authentication information to the authentication device. After receiving the encrypted authentication information, the authentication device may decrypt the encrypted authentication information by using a locally prestored decryption key (constituting a key pair with the encryption key mentioned above), thus acquiring corresponding authentication information.

Optionally, the authentication information may be device identification information of a member device, which may be sent from respective member device to the authentication device by means of a Bluetooth message. Accordingly, Step 101 may be executed as below: the authentication device receives a Bluetooth message carrying respective device identification sent by a plurality of member devices.

Wherein, the device identification information may be a unique identification of the member device, for example, a MAC (Media Access Control) address.

In implementation, when an administrator wants to unlock administration authority of an authentication device system, the administrator may enable the Bluetooth function of a member device (for example, a smart wristband) for authentication, and then the member device will broadcast a Bluetooth message (carrying device identification of the member device) out periodically. Afterwards, the administrator moves to the authentication device, during which a Bluetooth message (having a certain broadcast scope) of the member device may be received if the authentication device is within the broadcast scope. The Bluetooth message may be parsed to acquire the device identification carried in the Bluetooth message.

In Step 102, it is performed a matching authentication of the authentication information.

In Step 103, it is determined a distance between an authenticated member device and the authentication device, wherein the authenticated member device is a member device from which the authentication information sent is matched with authentication information prestored in an authorized authentication information list.

In implementation, an authorized authentication information list in which authentication information about a plurality of authorized member devices is stored may be established in the authentication device. These member devices may be member devices in the charge of a plurality of administrators with certain authority levels. The authorized authentication information list may be set by the administrators when the authentication device system is at an administration authority unlocking status, and a setting procedure will be described in detail in the subsequent content. After receiving the authentication information sent by the member device, the authentication device may look up the authentication information from the authorized authentication information list stored therein. If the authentication information is found, it is judged that the matching authentication succeeds, and the member device could be determined as an authenticated member device and the distance between the member device and a target terminal shall be determined. Multiple methods may be used for determining the distance, with a suitable one selected according to actual requirements. The authentication device may deal with each member device sending the authentication information in the way described above. The authentication device may monitor the distance between the authentication device and each terminal whose authentication information is included in the authorized authentication information list in real time.

Optionally, if the above authentication information is device identification information of the member device and the member device sends the device identification information to the authentication device through a Bluetooth message, accordingly, the processing procedure of Step 102 may be as below.

Step I: it is automatically replied to the Bluetooth message sent by the authenticated member device so as to establish a Bluetooth connection; wherein the authenticated member device is a member device from which the device identification information sent is matched with device identification information prestored in an authorized authentication information list.

In implementation, device identification information of a plurality of authorized member devices are recorded in the authorized authentication information list stored in the authentication device. After receiving a Bluetooth message broadcasted by the member device, the authentication device may parse the Bluetooth message and acquire the device identification information therein, and then look up the device identification information from an authorized authentication information list stored locally. A matching authentication is judged as successful and the member device is determined as a member device authenticated if the device identification is found. At the moment, the authentication device may automatically generate a Bluetooth feedback message corresponding to the Bluetooth message and send the Bluetooth feedback message to the member device, wherein the Bluetooth feedback message may carry the device identification information of the authentication device, and a Bluetooth connection may be established between the authentication device and the member device. In this way, a Bluetooth connection may be automatically established between the authentication device and member devices when these member devices whose device identification is included in the authorized authentication information list get close to the authentication device.

Step II: it is determined the distance between the corresponding authenticated member device and the authentication device by means of the Bluetooth connection established.

In implementation, by using the characteristic of the Bluetooth connection on distance determination, the authentication device may determine the distance between the authentication device and member devices (establishing a Bluetooth connection with the authentication device) by means of the intensity of Bluetooth signal.

In Step 104, local administration authority is unlocked if a number of authenticated member devices from which the distance determined to the authentication device is smaller than a predetermined distance threshold reaches a predetermined number threshold.

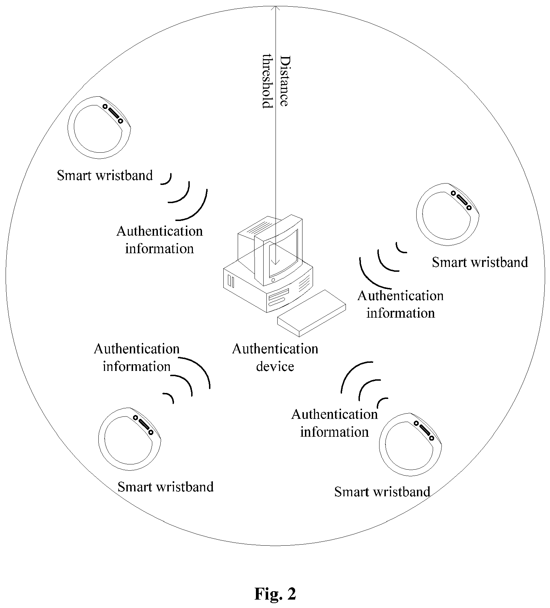

In implementation, in the application scenario as shown in Fig. 2, in the determination of the distance between the authentication device and authenticated member devices (establishing a Bluetooth connection with the authentication device), the authentication device may judge in real time whether the distance between the authenticated member devices and the authentication device itself is smaller than the predetermined distance threshold, and determine a number of authenticated member devices from which the distance determined to the authentication device is smaller than the predetermined distance threshold. When multiple administrators get close to the authentication device, carrying their member devices, and step into the scope which takes the predetermined distance threshold as the radius, it is possible to trigger the authentication device to unlock administration authority if the number of administrators is greater than or equal to the predetermined number threshold, and further the administrators may access to the system of the authentication device and perform corresponding operations. For example, after the authentication device completes a power-on self test, it enters into an authentication page, at this moment, a certain number of administrators wearing smart wristbands get close to the authentication device, which may be triggered to automatically judge that identity authentication succeeds so as to log onto the system (i.e., the administration authority of the system is unlocked). This method may also be used to log onto an application in addition to logging onto a system.

Wherein, unlocking of administration authority for a data processing system may be not achieved unless the predetermined number threshold is equal to the quantity of authentication information in the authorized authentication information list (i.e., all authorized administrators are required to carry their member devices and get close to the authentication device). Or, the predetermined number threshold may also be smaller than the quantity of authentication information in the authorized authentication information list, in which case, the predetermined number threshold may be a certain specified value, or be equal to product of a predetermined percentage (for example, 50%) and the quantity of authentication information in the authorized authentication information list.

Optionally, after unlocking administration authority, the authentication device may record all terminals participating in this authentication. A corresponding treatment may be as below: it is recorded authenticated member devices from which the distance determined to the authentication device is smaller than the predetermined distance threshold.

In implementation, after the administration authority is unlocked, the authentication device may record authenticated member devices from which the distance determined to the authentication device is smaller than the predetermined distance threshold, and may record information such as device identification of these authenticated member devices.

The embodiments of the present disclosure also provide a method for setting the authorized authentication information list, concretely as below: the authorization device receives an authentication information setting request which carries authentication information to be set, and adds the authentication information to be set into the authorized authentication information list.

In implementation, the administrator may set the authorized authentication information list when the system of the authentication device is at an administration authority unlocking status. The function setting page of the system is provided with an option for setting the authorized authentication information list. After the option is selected, it is entered into a setting page of the authorized authentication information list, in which an input box for adding authorization information is displayed. The administrator may input authentication information (i.e., authentication information to be set) of a member device to be authorized into the input box and then click the OK button. Then the authentication device will receive an authentication information setting request which carries the authentication information, and the authentication device may be triggered to add the authentication information into the authorized authentication information list. In the subsequent process, member devices storing the authentication information may participate in the unlocking process of the administration authority of the authentication device by means of the processing procedures in the above Step 101-103.

The embodiments of the present disclosure also provide a method for setting the distance threshold mentioned above, as below: the authorization device receives a distance setting request which carries a distance threshold to be set, and adjusts the predetermined distance threshold as the distance threshold to be set.

In implementation, in the authentication device, the predetermined distance threshold mentioned above may either be a default value of the system, or be adjusted by the administrator according to requirements. The administrator may set the predetermined distance threshold when the system of the authentication device is at an administration authority unlocking status. The function setting page of the system is provided with an option for setting the distance threshold. After the option is selected, it is entered into the distance threshold setting page, in which a distance threshold input box is displayed. The administrator may input a new distance threshold (i.e., the distance threshold to be set) into the input box and then click the OK button. Then the authentication device will receive a distance setting request which carries the distance threshold inputted by the administrator, and the authentication device may be triggered to adjust the predetermined distance threshold as the distance threshold inputted by the administrator.

The embodiments of the present disclosure also provide a method for setting the number threshold, as below: the authorization device receives a number setting request which carries a number threshold to be set, and adjusts the predetermined number threshold as the number threshold to be set.

In implementation, in the authentication device, the predetermined number threshold mentioned above may either be a default value of the system, or be adjusted by the administrator according to requirements. The administrator may set the predetermined number threshold when the system of the authentication device is at an administration authority unlocking status. The function setting page of the system is provided with an option for setting the number threshold. After the option is selected, it is entered into the number threshold setting page, in which a number threshold input box is displayed. The administrator may input a new number threshold (i.e., the number threshold to be set) into the input box and then click the OK button. Then the authentication device will receive a number setting request which carries the number threshold inputted by the administrator, and the authentication device may be triggered to adjust the predetermined number threshold as the number threshold inputted by the administrator.

In addition to the above method for setting the number threshold as a fixed value, regarding the condition in which the above predetermined number threshold is equal to product of a predetermined percentage and the quantity of authentication information in the authorized authentication information list, a similar method may be adopted for setting the predetermined percentage. For example, the predetermined percentage may be adjusted from original 50% to 60% in order to improve the security of the system to a certain extent. In this way, it is possible to achieve fine adjustment of the system security and authentication convenience.

In the embodiments of the present disclosure, the authentication device receives authentication information sent by a plurality of member devices; performs a matching authentication of the authentication information; determines a distance between an authenticated member device and the authentication device, wherein the authenticated member device is a member device from which the authentication information sent is matched with authentication information prestored in an authorized authentication information list; and unlocks local administration authority if a number of authenticated member devices from which the distance determined to the authentication device is smaller than a predetermined distance threshold reaches a predetermined number threshold. In this way, unlocking administration authority is available as long as a certain number of administrators carrying member devices get close to the authentication device, thus improving the flexibility of unlocking administration authority.

### Embodiment III

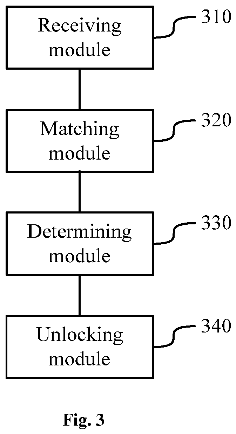

Based on the same technical concept, the embodiment of the present disclosure also provides a device for performing authentication for a data processing system. As shown in Fig. 3, the authentication device includes: a receiving module 310, a matching module 320, a determining module 330 and an unlocking module 340.

The receiving module 310 is configured to receive authentication information sent by a plurality of member devices, wherein the member device including a mobile terminal or a wearable device.

The matching module 320 is configured to perform a matching authentication of the authentication information.

The determining module 330 is configured to determine a distance between an authenticated member device and the authentication device, wherein the authenticated member device being a member device from which the authentication information sent is matched with authentication information prestored in an authorized authentication information list.

The unlocking module 340 is configured to unlock local administration authority if a number of authenticated member devices from which the distance to the authentication device is smaller than a predetermined distance threshold reaches a predetermined number threshold.

Optionally, the authentication information is a device identification information.

The receiving module may be configured to:
receive a Bluetooth message carrying respective device identification information sent by a plurality of member devices;
the determining module is configured to:
   automatically reply to the Bluetooth message sent by the authenticated member device so as to establish a Bluetooth connection; wherein the authenticated member device being a member device from which the device identification information sent is matched with device identification information prestored in an authorized authentication information list; and
   determine the distance between a corresponding authenticated member device and the authentication device by means of the Bluetooth connection established.

In one example embodiment, the authentication device also includes a recording module, which is configured to:
record authenticated member devices from which the distance determined to the authentication device is smaller than the predetermined distance threshold after unlocking local administration authority.

In one example embodiment, the predetermined number threshold is less than or equal to a quantity of authentication information in the authorized authentication information list.

In one example embodiment, the authentication device also includes a setting module, which is configured to:
receive an authentication information setting request which carries authentication information to be set; and
add the authentication information to be set into the authorized authentication information list.

In one example embodiment, the authentication device also includes a setting module, which is configured to:
receive a number setting request which carries a number threshold to be set; and
adjust the predetermined number threshold as the number threshold to be set.

With regard to the device in the above embodiment, detailed description of modes for performing operation of modules has been made in the embodiment related to the method, no detailed illustration will be made herein.

In the embodiments of the present disclosure, the authentication device receives authentication information sent by a plurality of member devices; performs a matching authentication of the authentication information; determines a distance between an authenticated member device and the authentication device; wherein the authenticated member device is a member device from which the authentication information sent is matched with authentication information prestored in an authorized authentication information list; and unlocks local administration authority if the number of authenticated member devices from which the distance determined to the authentication device is smaller than a predetermined distance threshold reaches a predetermined number threshold. In this way, unlocking administration authority is available as long as a certain number of administrators carrying member devices get close to the authentication device, thus improving the flexibility of unlocking administration authority.

It should be explained that when the device for unlocking administration authority provided in the above embodiments unlocks administration authority, it is merely illustrated by partition of above functional modules. In actual application, the above allocated functions may be implemented with different functional modules according to actual needs. That is, the inner structure of the device may be divided into different functional modules to accomplish part or all of the functions described as above. In addition, with respect to the device for unlocking administration authority provided by the above embodiments belonging to the same conception as the embodiments of the method for unlocking administration authority, the implementations have been described in detail in the foregoing method embodiments, not elaborated any more herein.

### Embodiment IV

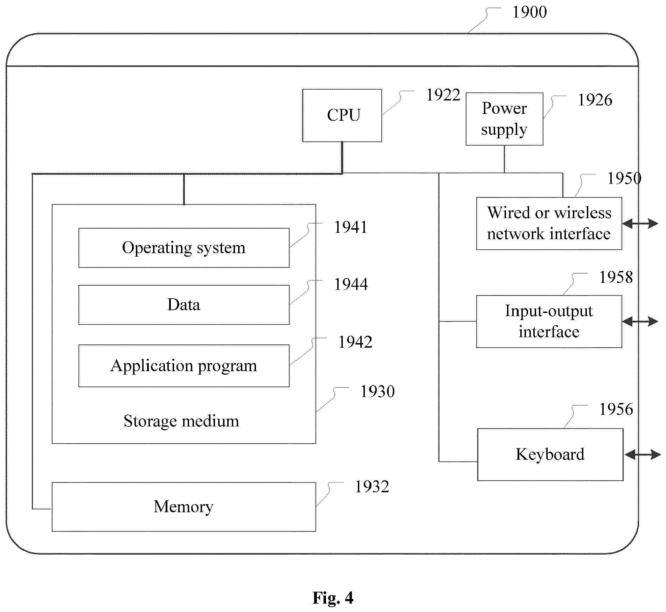

Fig. 4 is a block diagram of the authentication device for a data processing system according to the embodiment of the present disclosure. The authentication device 1900 may be relatively largely different due to different configurations or properties, and may include one or more CPUs (central processing unit) 1922 (e.g., one or more processors) and a memory 1932 , one or more storage media 1930 storing application program 1942 or data 1944 (e.g., one or more mass storage devices). Wherein, the storage medium 1930 and the memory 1932 may store temporarily or permanently. The program stored in the storage medium 1930 may include one or more modules (not shown in this drawing), each of which may include a series of instruction operations in the authentication device. More further, the CPU 1922 may be configured to communicate with the store medium 1930, a series of instruction operations in the storage medium 1930 are executed on the authentication device 1900.

The authentication device 1900 may also include one or more power sources 1926, one or more wired or wireless network interfaces 1950, one or more input-output interfaces 1958, one or more keyboards 1956, and/or one or more operating systems 1941 such as Windows Server™, Mac OS X™, Unix™, Linux™, FreeBSD™ and the like.

In the present embodiment, the authentication device 1900 may also include a memory, and one or more programs stored in the memory, wherein the one or more programs are configured to be executed by one or more processors, and include instructions configured to perform the following operations:
the authentication device receiving authentication information sent by a plurality of member devices, wherein the member device including a mobile terminal or a wearable device;
performing a matching authentication of the authentication information;
determining a distance between an authenticated member device and the authentication device, wherein the authenticated member device being a member device from which the authentication information sent is matched with authentication information prestored in an authorized authentication information list; and
unlocking local administration authority if a number of authenticated member devices from which the distance determined to the authentication device is smaller than a predetermined distance threshold reaches a predetermined number threshold.

Optionally, the authentication information is a device identification;
the step of the authentication device receiving authentication information sent by a plurality of member devices includes:
the authentication device receiving a Bluetooth message carrying respective device identification information sent by a plurality of member devices;
the step of determining a distance between an authenticated member device and the authentication device (wherein the authenticated member device being a member device from which the authentication information sent is matched with authentication information prestored in an authorized authentication information list) includes:
   automatically replying to the Bluetooth message sent by the authenticated member device so as to establish a Bluetooth connection; wherein the authenticated member device being a member device from which the device identification information sent is matched with the device identification information prestored in an authorized authentication information list; and
   determining the distance between the corresponding authenticated member device and the authentication device by means of the Bluetooth connection established.

Optionally, after unlocking local administration authority, the method also includes:
recording authenticated member devices from which the distance determined to the authentication device is smaller than the predetermined distance threshold.

Optionally, the predetermined number threshold is less than or equal to a quantity of authentication information in the authorized authentication information list.

Optionally, the method also includes:
the authentication device receiving an authentication information setting request which carries authentication information to be set;
the authentication device adding the authentication information to be set into the authorized authentication information list.

Optionally, the method also includes:
the authentication device receiving a number setting request which carries a number threshold to be set;
the authentication device adjusting the predetermined number threshold as the number threshold to be set.

In the embodiments of the present disclosure, the authentication device receives authentication information sent by a plurality of member devices; performs a matching authentication of the authentication information; determines a distance between an authenticated member device and the authentication device, wherein the authenticated member device is a member device from which the authentication information sent is matched with authentication information prestored in an authorized authentication information list; and unlocks local administration authority if a number of authenticated member devices from which a distance to the authentication device is smaller than a predetermined distance threshold reaches a predetermined number threshold. In this way, unlocking administration authority is available as long as a certain number of administrators carrying member devices get close to the authentication device, thus improving the flexibility of unlocking administration authority.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for unlocking administration authority for a data processing system, comprising:
receiving (101), at an authentication device, authentication information sent from a plurality of member devices, wherein the member devices comprising a mobile terminal or a wearable device;
performing (102) a matching authentication of the authentication information;
determining (103) a distance between an authenticated member device and the authentication device, wherein the authentication information sent from the authenticated member device is matched with authentication information prestored in an authorized authentication information list;
unlocking (104) local administration authority if a number of authenticated member devices that are located within a predetermined distance threshold from the authentication device reaches a predetermined number threshold;
and **characterised in that** the step of receiving authentication information sent from a plurality of member devices further comprises operating, by a user of a member device from the plurality of member devices, the member device to send the authentication information pre-stored at the member device to the authentication device.

2. The method of claim 1, **characterised in that** the authentication information comprises device identification information;
the receiving, at an authentication device, authentication information sent from a plurality of member devices comprises:
receiving at the authentication device a Bluetooth message carrying respective device identification information sent from each of the plurality of member devices;
the determining a distance between the authenticated member device and the authentication device, comprises:
automatically replying to the Bluetooth message sent from the authenticated member device so as to establish a Bluetooth connection; and
determining the distance between a corresponding authenticated member device and the authentication device by means of the Bluetooth connection established.

3. The method of claim 1, **characterised in that** after the unlocking local administration authority, the method further comprises:
recording authenticated member devices from which the distances determined to the authentication device are smaller than the predetermined distance threshold.

4. The method of claim 1, **characterised in that** the predetermined number threshold is less than or equal to a predetermined number of segments of the authentication information in the authorized authentication information list.

5. The method of claim 1, **characterised in that** the method further comprises:
receiving at the authentication device an authentication information setting request which carries authentication information to be set;
adding at the authentication device the authentication information to be set into the authorized authentication information list.

6. The method of claim 1, **characterised in that** the method further comprises:
receiving at the authentication device a number setting request which carries a number threshold to be set;
adjusting at the authentication device the predetermined number threshold to the number threshold to be set.

7. An authentication system for a data processing system, comprising:
an authentication device, which comprises
a receiving module (310), configured to receive authentication information sent from a plurality of member devices, wherein the member devices comprising a mobile terminal or a wearable device;
a matching module (320), configured to perform a matching authentication of the authentication information;
a determining module (330), configured to determine a distance between an authenticated member device and the authentication device, wherein the authentication information sent from the authenticated member device is matched with authentication information prestored in an authorized authentication information list;
an unlocking module (340), configured to unlock local administration authority if a number of authenticated member devices that are located within a predetermined distance threshold from the authentication device reaches a predetermined number threshold.
and wherein the system further comprises a plurality of member devices, configured to send authentication information
**characterised in that** the receiving module is configured to receive authentication information sent from the plurality of member devices when a member device from the plurality of member devices is operated, by each user of the member device from the plurality of member devices, to send the authentication information pre-stored at the member device to the authentication device.

8. The authentication system of claim 7, **characterised in that** the authentication information comprises device identification information;
the receiving module is configured to:
receive a Bluetooth message carrying respective device identification information sent from the plurality of member devices;
the determining module is configured to:
automatically reply to the Bluetooth message sent from the authenticated member device so as to establish a Bluetooth connection; and
determine the distance between a corresponding authenticated member device and the authentication device by means of the Bluetooth connection established.

9. The authentication system of claim 7, **characterised in that** the authentication device further comprises a recording module, configured to record authenticated member devices from which the distances determined to the authentication device are smaller than the predetermined distance threshold after unlocking local administration authority.

10. The authentication system of claim 7, **characterised in that** the predetermined number threshold is less than or equal to a predetermined number of segments of the authentication information in the authorized authentication information list.

11. The authentication system of claim 7, **characterised in that** the authentication device further comprises a setting module, configured to receive an authentication information setting request carrying authentication information to be set; and
add the authentication information to be set into the authorized authentication information list.

12. The authentication system of claim 7, **characterised in that** the authentication device further comprises a setting module, configured to receive a number setting request carrying a number threshold to be set; and
adjust the predetermined number threshold to the number threshold to be set.

13. A computer program, which when executing on a processor, performs a method according to any one of claims 1 to 6.

## Patentansprüche

1. Verfahren zum Entsperren von Verwaltungsberechtigung für ein Datenverarbeitungssystem, das Folgendes aufweist:
an einer Authentifizierungsvorrichtung Empfangen (101) von von mehreren Teilnehmervorrichtungen gesendeten Authentifizierungsinformationen, wobei die Teilnehmervorrichtungen ein Mobil-Endgerät oder eine am Körper tragbare Vorrichtung umfassen;
Durchführen (102) eines Authentifizierungsabgleichs der Authentifizierungsinformationen;
Bestimmen (103) einer Entfernung zwischen einer authentifizierten Teilnehmervorrichtung und der Authentifizierungsvorrichtung, wobei die von der authentifizierten Teilnehmervorrichtung gesendeten Authentifizierungsinformationen mit in einer Liste der Berechtigten-Authentifizierungsinformationen vorgespeicherten Authentifizierungsinformationen abgeglichen werden;
Entsperren (104) lokaler Verwaltungsberechtigung, falls eine Anzahl authentifizierter Teilnehmervorrichtungen, die innerhalb einer vorbestimmten Entfernungschwelle von der Authentifizierungsvorrichtung liegen, eine vorbestimmte Zahlenschwelle erreicht;
und **dadurch gekennzeichnet, dass** der Schritt des Empfangens der von mehreren Teilnehmervorrichtungen gesendeten Authentifizierungsinformationen ferner das Betreiben der Teilnehmervorrichtung durch einen Benutzer einer Teilnehmervorrichtung von den mehreren Teilnehmervorrichtungen zum Senden der an der Teilnehmervorrichtung vorgespeicherten Authentifizierungsinformationen an die Authentifizierungsvorrichtung aufweist.

2. Verfahren nach Anspruch 1, **dadurch gekennzeichnet, dass** die Authentifizierungsinformationen Vorrichtungsidentifizierungsinformationen aufweisen;
das Empfangen der von mehreren Teilnehmervorrichtungen gesendeten Authentifizierungsinformationen an einer Authentifizierungsvorrichtung Folgendes aufweist:
Empfangen einer Bluetooth-Nachricht, die jeweilige von jeder der mehreren Teilnehmervorrichtungen gesendete Vorrichtungsidentifizierungsinformationen trägt, an der Authentifizierungsvorrichtung;
das Bestimmen einer Entfernung zwischen der authentifizierten Teilnehmervorrichtung und der Authentifizierungsvorrichtung Folgendes aufweist:
automatisches Antworten auf die von der authentifizierten Teilnehmervorrichtung gesendete Bluetooth-Nachricht, um eine Bluetooth-Verbindung herzustellen; und
Bestimmen der Entfernung zwischen einer entsprechenden authentifizierten Teilnehmervorrichtung und der Authentifizierungsvorrichtung mittels der hergestellten Bluetooth-Verbindung.

3. Verfahren nach Anspruch 1, **dadurch gekennzeichnet, dass** das Verfahren nach dem Entsperren der lokalen Verwaltungsberechtigung ferner Folgendes aufweist:
Aufzeichnen von authentifizierten Teilnehmervorrichtungen, von denen die bestimmten Entfernungen zur Authentifizierungsvorrichtung kleiner als die vorbestimmte Entfernungsschwelle sind.

4. Verfahren nach Anspruch 1, **dadurch gekennzeichnet, dass** die vorbestimmte Zahlenschwelle kleiner oder gleich einer vorbestimmten Zahl von Segmenten der Authentifizierungsinformationen in der Liste der Berechtigten-Authentifizierungsinformationen ist.

5. Verfahren nach Anspruch 1, **dadurch gekennzeichnet, dass** das Verfahren ferner Folgendes aufweist:
an der Authentifizierungsvorrichtung Empfangen einer Authentifizierungsinformations-Einstellanforderung, die einzustellende Authentifizierungsinformationen trägt;
an der Authentifizierungsvorrichtung Hinzufügen der einzustellenden Authentifizierungsinformationen zu der Liste der Berechtigten-Authentifizierungsinformationen.

6. Verfahren nach Anspruch 1, **dadurch gekennzeichnet, dass** das Verfahren ferner Folgendes aufweist:
an der Authentifizierungsvorrichtung Empfangen einer Zahleneinstellungsanforderung, die eine einzustellende Zahlenschwelle trägt;
an der Authentifizierungsvorrichtung Anpassen der vorbestimmten Zahlenschwelle an die einzustellende Zahlenschwelle.

7. Authentifizierungssystem für ein Datenverarbeitungssystem, das Folgendes aufweist:
eine Authentifizierungsvorrichtung, die Folgendes aufweist:
ein Empfangsmodul (310), das konfiguriert ist zum Empfangen von von mehreren Teilnehmervorrichtungen gesendeten Authentifizierungsinformationen, wobei die Teilnehmervorrichtungen ein Mobil-Endgerät oder eine am Körper tragbare Vorrichtung umfassen;
ein Abgleichmodul (320), das konfiguriert ist zum Durchführen eines Authentifizierungsabgleichs der Authentifizierungsinformationen;
ein Bestimmungsmodul (330), das konfiguriert ist zum Bestimmen einer Entfernung zwischen einer authentifizierten Teilnehmervorrichtung und der Authentifizierungsvorrichtung, wobei die von der authentifizierten Teilnehmervorrichtung gesendeten Authentifizierungsinformationen mit in einer Liste der Berechtigten-Authentifizierungsinformationen vorgespeicherten Authentifizierungsinformationen abgeglichen werden;
ein Entsperrungsmodul (340), das konfiguriert ist zum Entsperren lokaler Verwaltungsberechtigung, falls eine Anzahl authentifizierter Teilnehmervorrichtungen, die innerhalb einer vorbestimmten Entfernungschwelle von der Authentifizierungsvorrichtung liegen, eine vorbestimmte Zahlenschwelle erreicht;
und wobei das System ferner mehrere Teilnehmervorrichtungen aufweist, die zum Senden von Authentifizierungsinformationen konfiguriert sind,
**dadurch gekennzeichnet, dass** das Empfangsmodul konfiguriert ist zum Empfangen der von den mehreren Teilnehmervorrichtungen gesendeten Authentifizierungsinformationen, wenn eine Teilnehmervorrichtung von den mehreren Teilnehmervorrichtungen durch jeden Benutzer der Teilnehmervorrichtung von den mehreren Teilnehmervorrichtungen zum Senden der an der Teilnehmervorrichtung vorgespeicherten Authentifizierungsinformationen an die Authentifizierungsvorrichtung betrieben wird.

8. Authentifizierungssystem nach Anspruch 7, **dadurch gekennzeichnet, dass** die Authentifizierungsinformationen Vorrichtungsidentifizierungsinformationen aufweisen;
wobei das Empfangsmodul konfiguriert ist zum:
Empfangen einer Bluetooth-Nachricht, die jeweilige von den mehreren Teilnehmervorrichtungen gesendete Vorrichtungsidentifizierungsinformationen trägt;
wobei das Bestimmungsmodul konfiguriert ist zum:
automatisches Antworten auf die von der authentifizierten Teilnehmervorrichtung gesendete Bluetooth-Nachricht, um eine Bluetooth-Verbindung herzustellen; und
Bestimmen der Entfernung zwischen einer entsprechenden authentifizierten Teilnehmervorrichtung und der Authentifizierungsvorrichtung mittels der hergestellten Bluetooth-Verbindung.

9. Authentifizierungssystem nach Anspruch 7, **dadurch gekennzeichnet, dass** die Authentifizierungsvorrichtung ferner ein Aufzeichnungsmodul aufweist, das zum Aufzeichnen von authentifizierten Teilnehmervorrichtungen konfiguriert ist, von denen die bestimmten Entfernungen zur Authentifizierungsvorrichtung kleiner als die vorbestimmte Entfernungsschwelle sind, nach dem Entsperren der lokalen Verwaltungsberechtigung.

10. Authentifizierungssystem nach Anspruch 7, **dadurch gekennzeichnet, dass** die vorbestimmte Zahlenschwelle kleiner oder gleich einer vorbestimmten Zahl von Segmenten der Authentifizierungsinformationen in der Liste der Berechtigten-Authentifizierungsinformationen ist.

11. Authentifizierungssystem nach Anspruch 7, **dadurch gekennzeichnet, dass** die Authentifizierungsvorrichtung ferner ein Einstellmodul aufweist, das konfiguriert ist zum Empfangen einer Authentifizierungsinformations-Einstellanforderung, die einzustellende Authentifizierungsinformationen trägt; und
zum Hinzufügen der einzustellenden Authentifizierungsinformationen zu der Liste der Berechtigten-Authentifizierungsinformationen.

12. Authentifizierungsvorrichtung nach Anspruch 7, **dadurch gekennzeichnet, dass** die Authentifizierungsvorrichtung ferner ein Einstellmodul aufweist, das konfiguriert ist zum Empfangen einer Zahleneinstellungsanforderung, die eine einzustellende Zahlenschwelle trägt; und
zum Anpassen der vorbestimmten Zahlenschwelle an die einzustellende Zahlenschwelle.

13. Computerprogramm, das bei Ausführung auf einem Prozessor ein Verfahren nach einem der Ansprüche 1 bis 6 durchführt.

## Revendications

1. Procédé de déverrouillage d'autorité d'administration pour un système de traitement de données, comprenant :
recevoir (101) à un dispositif d'authentification, des informations d'authentification envoyées d'une pluralité de dispositifs membres, où les dispositifs membres comprenant un terminal mobile ou un dispositif vestimentaire ;
effectuer (102) une authentification de concordance des informations d'authentification ;
déterminer (103) une distance entre un dispositif membre authentifié et le dispositif d'authentification, où les informations d'authentification envoyées du dispositif membre authentifié concordent avec des informations d'authentification pré-stockées dans une liste d'informations d'authentification autorisées ;
déverrouiller (104) une autorité d'administration locale si un nombre de dispositifs membres authentifiés qui sont situés à un seuil de distance prédéterminé du dispositif d'authentification atteint un seuil de nombre prédéterminé ;
et **caractérisé en ce que** l'étape de réception des informations d'authentification envoyées d'une pluralité de dispositifs membres comprend en outre actionner, par un utilisateur d'un dispositif membre de la pluralité de dispositifs membres, le dispositif membre pour envoyer les informations d'authentification pré-stockées au dispositif membre au dispositif d'authentification.

2. Procédé selon la revendication 1, **caractérisé en ce que** les informations d'authentification comprennent des informations d'identification de dispositif ;
le fait de recevoir, à un dispositif d'authentification, des informations d'authentification envoyées d'une pluralité de dispositifs membres comprend :
recevoir au dispositif d'authentification un message Bluetooth portant des informations d'identification de dispositif respectif envoyées de chacun de la pluralité de dispositifs membres ;
le fait de déterminer une distance entre le dispositif membre authentifié et le dispositif d'authentification, comprend :
répondre automatiquement au message Bluetooth du dispositif membre authentifié afin d'établir une connexion Bluetooth ; et
déterminer la distance entre un dispositif membre authentifié correspondant et le dispositif d'authentification au moyen de la connexion Bluetooth établie.

3. Procédé selon la revendication 1, **caractérisé en ce qu'**après le fait de déverrouiller l'autorité d'administration locale, le procédé comprend en outre :
enregistrer les dispositifs membres authentifiés desquels les distances déterminées jusqu'au dispositif d'authentification sont plus petites que le seuil de distance prédéterminé.

4. Procédé selon la revendication 1, **caractérisé en ce que** le seuil de nombre prédéterminé est moindre que ou égal à un nombre prédéterminé de segments des informations d'authentification dans la liste d'informations d'authentification autorisées.

5. Procédé selon la revendication 1, **caractérisé en ce que** le procédé comprend en outre :
recevoir au dispositif d'authentification une requête de réglage d'informations d'authentification qui porte des informations d'authentification à régler ;
ajouter au dispositif d'authentification, les informations d'authentification à régler dans la liste d'informations d'authentification autorisées.

6. Procédé selon la revendication 1, **caractérisé en ce que** le procédé comprend en outre :
recevoir au dispositif d'authentification une requête de réglage de nombre qui porte un seuil de nombre à régler ;
ajuster au dispositif d'authentification le seuil de nombre prédéterminé au seuil de nombre à régler.

7. Système d'authentification pour un système de traitement de données, comprenant :
un dispositif d'authentification qui comprend :
un module de réception (310), configuré pour recevoir des informations d'authentification envoyées d'une pluralité de dispositifs membres, où les dispositifs membres comprenant un terminal mobile ou un dispositif vestimentaire ;
un module de concordance (320), configuré pour effectuer une authentification de concordance des informations d'authentification ;
un module de détermination (330), configuré pour déterminer une distance entre un dispositif membre authentifié et le dispositif d'authentification, où les informations d'authentification envoyées du dispositif membre authentifié concordent avec des informations d'authentification pré-stockées dans une liste d'informations d'authentification autorisées ;
un module de déverrouillage (340), configuré pour déverrouiller une autorité d'administration locale si un nombre de dispositifs membres authentifiés qui sont situés à un seuil de distance prédéterminé du dispositif d'authentification atteint un seuil de nombre prédéterminé,
et où le système comprend en outre une pluralité de dispositifs membres, configurés pour envoyer des informations d'authentification,
**caractérisé en ce que** le module de réception est configuré pour recevoir des informations d'authentification envoyées de la pluralité de dispositifs membres lorsqu'un dispositif membre de la pluralité de dispositifs membres est actionné, par chaque utilisateur du dispositif membre de la pluralité de dispositifs membres, pour envoyer les informations d'authentification pré-stockées au dispositif membre au dispositif d'authentification.

8. Système d'authentification selon la revendication 7, **caractérisé en ce que** les informations d'authentification comprennent des informations d'identification de dispositif ;
le module de réception est configuré pour :
recevoir un message Bluetooth portant des informations d'identification de dispositif respectif de la pluralité de dispositifs membres ;
le module de détermination est configuré pour :
répondre automatiquement au message Bluetooth envoyé du dispositif membre authentifié afin d'établir une connexion Bluetooth ; et
déterminer la distance entre un dispositif membre authentifié correspondant et le dispositif d'authentification au moyen de la connexion Bluetooth établie.

9. Système d'authentification selon la revendication 7, **caractérisé en ce que** le dispositif d'authentification comprend en outre un module d'enregistrement, configuré pour enregistrer des dispositifs membres authentifiés desquels les distances déterminées jusqu'au dispositif d'authentification sont plus petites que le seuil de distance prédéterminé après le déverrouillage de l'autorité d'administration locale.

10. Système d'authentification selon la revendication 7, **caractérisé en ce que** le seuil de nombre prédéterminé est moindre que ou égal à un nombre prédéterminé de segments des informations d'authentification dans la liste d'informations d'authentification autorisées.

11. Système d'authentification selon la revendication 7, **caractérisé en ce que** le dispositif d'authentification comprend en outre un module de réglage, configuré pour recevoir une requête de réglage d'informations d'authentification portant des informations d'authentification à régler ; et
ajouter les informations d'authentification à régler dans la liste d'informations d'authentification autorisées.

12. Système d'authentification selon la revendication 7, **caractérisé en ce que** le dispositif d'authentification comprend en outre un module de réglage, configuré pour recevoir une requête de réglage de nombre portant un seuil de nombre à régler ; et
ajuster le seuil de nombre prédéterminé au seuil de nombre à régler.

13. Programme informatique, qui, lorsque exécuté sur un processeur, met en œuvre un procédé selon l'une quelconque des revendications 1 à 6.
